# EUROPEAN PATENT APPLICATION

(11) **EP 4 728 860 A1**
(43) Date of publication of application: **22.04.2026**
(21) Application number: 24206558.9
(22) Date of filing: 15.10.2024
(51) Int. Cl.: A01K 43/04

(54) **DOOR DEVICE FOR AN EGG GRADER**

(71) Applicant: INNOVO TEKNOLOJI YAZILIM VE TASARIM MÜHENDISLIK A.S., Muradiye Manisa (TR)
(72) Inventor: KOR, Mehmet Bahattin, Muradiye (Manisa) (TR); KAVADAR, Gökhan, Muradiye (Manisa) (TR)
(74) Representative: Hernández Hernández, Carlos

(57) **Abstract**

Door device (10) for an egg grader comprising a movable gate, the device attaching to the egg grader's frame by means of preferably two main levers (13) and subsidiary levers (14) coupled to two clamps (15, 18). The door device (10) comprises a male compressed air inlet (16) which is configured to couple with a female compressed air outlet (17) located on a compressed air pipe (22) attaching to the egg grader. The device comprises a compressed air system coupled to a tie rod (19) attached to the movable gate (11). The attachment and disengagement of the door device (10) requires no tools. By actuating the at least one lever (13), the door device (10) is quickly and securely locked into place, ensuring that the compressed air connections (16, 17) are correctly engaged.

## Description

### Technical field

The invention relates to machines for grading eggs and more specifically to the doors through which the eggs access the machine's exit floors after having been graded.

### Background art

On commercial egg farms, eggs are collected at least once a day and placed in an egg processing line which in successive stages cleans the eggs, checks them for quality rejecting the faulty ones and weighs the good eggs, directing them to different output conveyors according to their weight. The sorting of eggs according to their weight is called egg grading. An egg grader is the section of the egg processing machine that performs egg grading. It can also be an individually standing machine.

The input conveyor belt and the various output conveyors belts of an egg grader can be horizontally laid. A horizontal egg grader requires more room in the processing area than a vertical egg grader, where the eggs of different grades are conveyed to respective floors positioned on top of each other, each floor being communicated to an output conveyor belt.

The eggs reach the egg grader in an input conveyor belt, where the eggs are laid in rows across the belt, sitting in axially rotating spools. At the end of this input conveyor belt there is a weighing line, having individual loadcell units arranged in a row parallel to the egg rows. When a row of eggs reaches the weighing line, all eggs of the row are simultaneously weighted, each by an individual scale unit. The weighing device has been programmed according to weight ranges, where each weight range has been assigned an exit floor level. Once the eggs in a row have been weighted, they are lifted to their respective assigned exit floors. At each floor entrance there is one or more devices called doors, operated by compressed air systems, which are constantly opening and closing to let the eggs in.

The present invention is directed at solving the problem occurring when eggs break and their substances spread through the door mechanism, causing them to block or malfunction. In this occurrence, the operators must stop the machine to remove the door and their associated compressed air elements. This operation is time consuming and frequently the reattachment is not correctly done, causing further disturbances. It is desirable that this operation can be performed quickly and safely, disrupting the work to a minimum and ensuring that the doors are correctly put back in place. This is advantageous also where the doors must be removed for routine maintenance. Also, the modular design of the door device facilitates the replacement of its component parts.

Some beverages can be sold together with another element to be mixed at the moment of consumption. For instance, the so-called pearl tea or bubble tea consists of tea mixed with liquid-filled pearls or bubbles that burst when chewed by the person consuming the beverage. In catering facilities like bars or coffee shops, the tea and the bubbles are kept in different containers and are mixed when the drink is ordered. Bubble tea can also be sold to take away in supermarkets or other food stores. In the latter case, if both ingredients are sold pre-mixed in a single container, part of the bubbles could burst during pre-sale manipulation or between purchase and consumption.

### Summary of the invention

The subject matter of the present invention is a door device (10) for an egg grader as defined in the appended claims. The door device (10) has means of attachment to the egg grader, said means comprising at least one main lever (13) operatively coupled to at least two clamps (15, 18), each of the at least two clamps engaging respective attachment bars (21) located on the egg grader.

In an embodiment, the at least one main lever (13) is operatively coupled to the at least two clamps (15, 18) through subsidiary levers (24). In an embodiment, the means of attachment comprise two main levers (13) connected to each other through a connecting rod (25) and configured so that the attachment of the door device (10) by the at least two clamps (15, 18) can be performed either by operating the two main levers simultaneously or just one of the two main levers (13).

The door device (10) comprises a compressed air inlet (16) which is configured to couple with a compressed air outlet (17) located on a compressed air pipe (22) belonging to the egg grader. Preferably, the compressed air inlet (16) and the compressed air outlet (17) are configured as male and female connectors.

The door device (10) comprises a movable gate. The compressed air inlet (16) is connected to a compressed air cylinder barrel (12) housing a piston rod (14) and piston. The piston is connected to a tie rod (19) attached to the movable gate (11). The movement of the piston is thus transmitted to the movable gate (11). The movable gate (11) presents a slot through which it can slide inwards and outwards of a canal formed by two side plates (23) and a base plate (27).

The attachment and disengagement of the door device (10) requires no tools. By hand-actuating the at least one lever (13), the door device (10) is quickly and securely locked into place. If an incidence occurs preventing a smooth functioning of any of the egg grader's door devices (10), for instance where a door is jammed or blocked by egg matter, the operator can remove the affected door (10), clean it and put it back quickly and safely, ensuring that the compressed air connections (16, 17) are correctly engaged. Neither hard pulling nor tangling with any compressed air element is needed. Particularly, compressed air hoses, which are difficult to manipulate, are disposed with. In a machine like an egg grader, which may count dozens of individual door devices (10) the present technical solution brings considerable costs savings and improved performance. As an additional advantage, the door device (10) can be disassembled and any of its parts easily replaced.

### Brief description of drawings

FIG. 1: An array of door devices attached to corresponding attachment bars in the frame of an egg grader.
FIG. 2: Perspective view of a door device for an egg grader attached to an attachment bar.
FIG. 3: Perspective view of a door device for an egg grader with a side plate removed.
FIG. 4: Exploded view of a door device for an egg grader.

### Description of embodiments

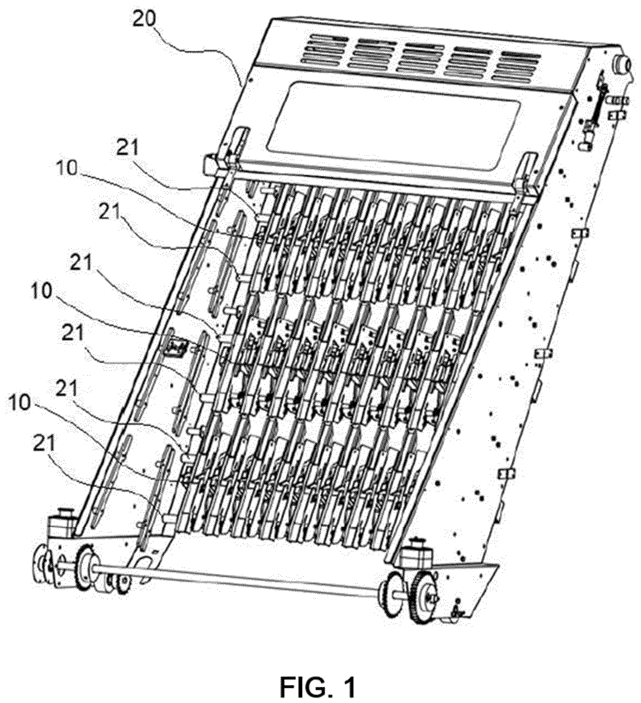

Fig. 1 represents an array of door devices (10) attached to a frame (20), the frame (20) being part of an egg grader. The frame (20) has attachment bars (21), preferably cylindrical and metallic, whose ends are attached to respective lateral sides of the frame (20). Each door device (10) is clamped to two bars (21).

In the example, the frame (20) has three rows of door devices (10), each row having eight devices (10). The three rows of door devices (10) are placed on top of each other. Each row corresponds to an exit floor of the egg grader. In the example, all the door devices (10) are closed. In this position, each of the door devices (10) is in touch with at least one corresponding device (10) of the other rows, creating canals that guide the eggs in their upwards movement.

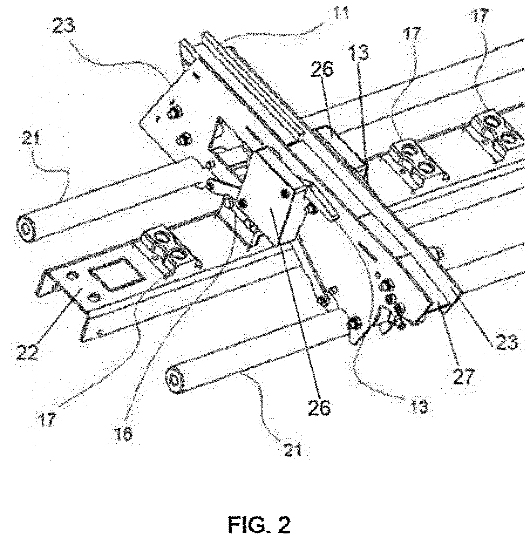

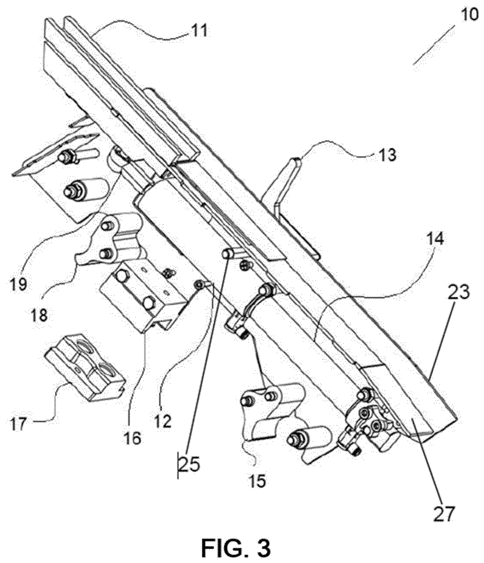

For example, if an egg has been destined to the first floor, when reaching such floor a movable gate (11) (referenced in figures 2 and 3) in the corresponding door device (10) on that floor will slide inwards, offering an opening through which the egg will enter the first floor. Immediately afterwards the movable gate (11) will slide outwards, thus closing the gate and allowing the passing of another egg which will be ascending through the same canal destined to an upper floor.

Fig. 2 is a door device (10) attached to two cylindrical metal bars (21) of the frame (20). The door device (10) has a sandwich configuration, in the sense that most of the components of the door device (10) are housed between to side plates (23), which attached to each other conventionally by screws and nuts. A base plate (27) placed between the two side plates (23) forms a canal. This base plate (27) interacts with the movable gate (11).

Behind the attachment bars (21), Fig. 2 shows another element which attaches to the egg grader frame (20), namely a compressed air pipe (22), having a set of evenly distributed air outlets (17). Preferably, for every set of two attachments bars (21), an air pipe (22) is placed between them. The door device (10) will be attached to the two bars (21) at a point where an air outlet (17) in the air pipe (22) will coincide with a corresponding air inlet (16) (shown in Fig. 3) in the door device (10), so that both elements can be coupled. Compressed air outlets (17) and inlets (16) are preferably configured as female and male connectors.

Attachment of the door device (10) to the bars (21) is performed by an attachment device that comprises at least one main lever (13) and preferably two main levers (13) arranged in parallel. The main levers (13) are located one on each side of the door device (10), outside of the side plates (23). The lower end of each main lever (13) is coupled to a set of two subsidiary levers (24), the two sets arranged in parallel to each other. The area where the main levers (13) engage their respective subsidiary levers (14) is protected by a box (26). In the lower area of the door device (10) there are a lower clamp (15) and an upper clamp (18), both shown on Fig. 3, having an approximatively semi-circular portion. They are made preferably of plastic.

An end of one of the four subsidiary levers (14) is operatively coupled to one side of the lower clamp (15) and its parallel subsidiary lever (14) is attached to the other side of the same lower clamp (15). The remaining two subsidiary levers (14) are operatively coupled to respective sides of the upper clamp (18). Finally, Fig. 2 shows that on the lower edge of the two side plates (23) there are two approximately semi-circular cuttings corresponding to the semi-circular portions on the lower and upper clamps (15, 18).

As mentioned above, the door device (10) is attached to two bars (21). To this end, the device (10) is placed such as to make the lower clamp (15) coincide with one bar (21) and the upper clamp (18) with the immediately superior bar (21) and always at a point where the male compressed air inlet (16) is on top of a female compressed air outlet (17) in the compressed air pipe (22). Attachment is obtained by simply operating any of the main levers (13) or both at a time, which will result in the clamps (15, 18) firmly embracing the bars (21). This embrace is enhanced by the cooperation with the semi-circular cuttings in the side plates (23). The connection between the compressed air outlet and inlet will be airtight.

It must be noted that the two main levers (13) are connected through a connecting rod (25) (shown in Fig. 3) so that applying an actuation pressure on any of the two main levers (13) will cause the two of them to move simultaneously. However, if both main levers (13) are actuated simultaneously, the operation will require less effort.

Disengagement of the door device (10) just requires moving at least one lever, or both at a time, in the opposite direction. This allows quick and safe attachment and removal operations.

Finally, Fig. 2 shows the canal that is formed between the two side plates (23) and an base plate (27). At the upper end of this canal, a movable gate (11) is arranged, actuated by a compressed air system.

Fig. 3 represents a door device (10) where one side plate (23), the protecting box (26) the main lever (13) and the two subsidiary levers (24) have been removed, to provide a view of internal elements of the device: the connecting rod (25) between the two main levers (13), the lower clamp (15) and the upper clamp (18).

Also, Fig. 3 displays the different elements of the compressed air system which comprises, apart from the male inlet (16) attached to both side plates (23), a conventional compressed air cylinder barrel (12), inside which there is a known piston rod (14) and corresponding piston (not shown). The piston is connected to a tie rod (19) removably attached to the lower face of the movable gate (11).

The movable gate (11) has an upper face configured like a canal. Underneath this, there is a slot through which the movable gate (11) is inserted in the base plate (27). The lower face of the movable gate (11) is coupled to the tie rod (19). By this configuration, the movable gate (11) is adapted to slide inwards and outwards of the canal formed by the two side plates (23) and the base plate (27).

Fig. 3 represents the movable gate (11) in the open position, as opposed to the close position, where the piston rod (14) will move inside the cylinder barrel (12), pushing forward the tie rod (19) and therefore the movable gate (11).

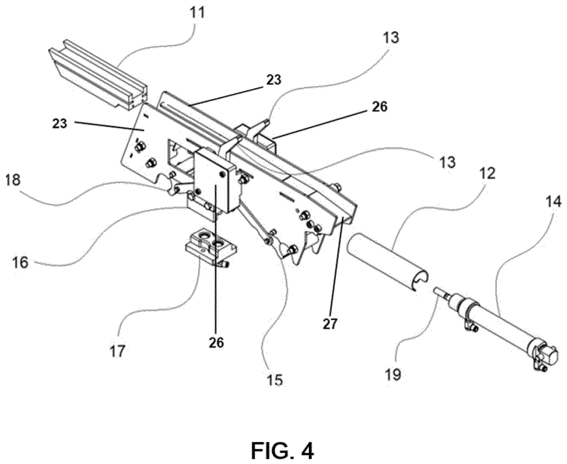

Fig. 4 shows the door device (10) in an exploded view for a better appreciation of its component parts.

## Claims

1. A door device (10) for an egg grader, the door device (10) having means of attachment to the egg grader, **characterized in that** the means of attachment comprise at least one main lever (13) operatively coupled to at least two clamps (15, 18), each of the at least two clamps engaging respective attachment bars (21) located on the egg grader.

2. The door device (10) of claim 1 **characterized in that** the at least one main lever (13) is operatively coupled to the at least two clamps (15, 18) through subsidiary levers (24).

3. The door device (10) of claim 1 **characterized in that** the means of attachment comprise two main levers (13) connected through a connecting rod (25) and configured so that the attachment of the door device (10) by the at least two clamps (15, 18) can be performed either by operating the two main levers simultaneously or just one of the two main levers (13).

4. The door device (10) of claim 1 further comprising a compressed air inlet (16) which is configured to couple with a compressed air outlet (17) located on a compressed air pipe (22) installed between two attachment bars (21).

5. The door device (10) of claim 4, **characterized in that** the compressed air inlet (16) and the compressed air outlet (17) are configured as male and female connectors.

6. The door device (10) of claim 4 **characterized in that** the compressed air inlet (16) is connected to a compressed air cylinder barrel (12), inside which there is a piston rod (14) and corresponding piston, wherein the piston is connected to a tie rod (19) attached to a movable gate (11) configured to slide inwards and outwards of a canal formed by two side plates (23) and a base plate (27).
